# EUROPEAN PATENT SPECIFICATION

(11) **EP 2 587 939 B1**
(45) Date of publication and mention of the grant of the patent: **19.03.2014**
(21) Application number: 11727299.7
(22) Date of filing: 26.05.2011
(51) Int. Cl.: A23L 1/22

(54) **ACTIVE INGREDIENT DELIVERY SYSTEM**
WIRKSTOFFFREISETZUNGSSYSTEM
SYSTÈME D'ADMINISTRATION DE PRINCIPE ACTIF

(30) Priority: 29.06.2010 US 359615 P
(43) Date of publication of application: 08.05.2013
(73) Proprietor: Firmenich SA, 1211 Geneva 8 (CH)
(72) Inventor: GREGSON, Christopher M., Plainsboro, New Jersey 08536 (US); SILLICK, Matthew P., Plainsboro, New Jersey 08536 (US)
(74) Representative: Carina, Riccardo Filippo
(86) International application number: PCT/IB2011/052292
(87) International publication number: WO 2012/001547

(56) References cited:
- WO-A1-2008/155696
- WO-A2-03/105786
- WO-A2-2010/014813

## Description

### Technical field

The present invention relates to a delivery system for poorly water soluble solid active ingredients. It also relates to a process for preparing such a delivery system.

### Background and prior art

Delivery systems are used in various industries to protect active ingredients or to control their release. For instance in the pharmaceutical industry, many active pharmaceutical ingredients ("api") suffer from poor water solubility and, to address this, "solid dispersions" are prepared that provide a very intimate mixture of the api and the freely soluble carrier. Numerous publications describing solid dispersions exist, such as Chiou, W.L. and S.Riegelman. 1971. Pharmaceutical Applications of Solid Dispersion Systems, Journal of Pharmaceutical Sciences 60:1281-1302; Craig, D.Q.M. 2002. The mechanisms of drug release from solid dispersions in water-soluble polymers. International Journal of Pharmaceutics 231:131-144; Leuner, C. and J.Dressman. 2000. Improving drug solubility for oral delivery using solid dispersions. European Journal of Pharmaceutics and Biophannaceutics 50:47-60; Serajuddin, A.T.M. 1999. Solid dispersion of poorly water-soluble drugs: Early promises, subsequent problems, and recent breakthroughs. Journal of Pharmaceutical Sciences 88:1058-1066; and Van Drooge,D.J. Combining the incompatible: inulin glass dispersions for fast dissolution, stabilization and formulation of lipophilic drugs. 2006. Pröfschrift Rijksuniversiteit Groningen.

Compound I, as defined below, is a molecule that enhances the taste of sucrose. In use, it does not have a sweetening effect by itself but works in conjunction with sucrose allowing a significant reduction in the content of sucrose required whilst maintaining the desired sweetening effect. It is solid at room temperature and has a slow rate of dissolution in water, being very significantly slower than sucrose. Nevertheless, to operate effectively, it is important that it dissolves sufficiently rapidly, preferably at or near the rate at which sucrose dissolves.

None of the documents referred to above disclose or suggest that a solid dispersion of compound 1 as part of a delivery system can be used to improve the rate of dissolution of the slowly dissolving solid compound I.

WO 2010/014813 (Shigemura) describes compositions of Compound I mixed with food ingredients. Improved rates of dissolution were found for both particles prepared by spray drying and melt spinning. Spray drying and melt spinning produce solids that are typically amorphous or glassy, which may be disadvantageous for certain applications. Thus, it is an object of the present invention to address one or more of the abovementioned problems and/or to provide one or more of the solutions mentioned above.

### Summary of the Invention

Accordingly, the present invention provides a delivery system in the form of a solid dispersion comprising
(i) a carrier material comprising a crystalline matrix material,
(ii) a solid active ingredient having the structure: 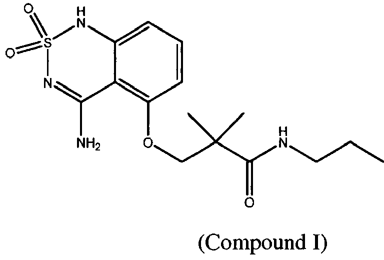 or salts thereof
   wherein the solid active ingredient (ii) is dispersed throughout a matrix of the crystalline carrier material (i).

The invention also provides a process for preparing a delivery system comprising the steps of:
(i) forming a melt of a carrier material consisting essentially of a crystalline matrix material,
(ii) incorporating a solid active ingredient having the structure according to compound I into the melt,
(iii) forming a melt-mixture comprising an emulsion, dispersion, solution or suspension of the active ingredient in the melt,
(iv) forming discrete particles of the melt mixture,
(v) cooling the discrete particles,
(vi) optionally grinding the discrete particles
so as to form a solid dispersion of the active ingredient in a matrix of the delivery system.

In the process, the melt-mixture of step (iii) preferably comprises 10wt% or less, more preferably 7wt% or less of water, relative to the total weight of the melt mixture.

If the process comprises encapsulation by spray-chilling, then the cooling step of the process preferably removes heat at a rate of greater than about 600kJ.kg⁻¹.min⁻¹.

In an alternative process, the process proceeds as described above up to and including step (iii). Following these steps, preparing a delivery system comprises the steps of:
(iv) cooling the melt-mixture to form a solid mass
(v) grinding the solid mass to form particles of the desired size.

In the process, a further encapsulation step of the particulate delivery system may be provided.

This alternative process is particularly useful where the crystalline matrix material has a tendency to form crystals at a slow rate.

### Detailed Description

The delivery system of the present invention comprises a crystalline matrix material. By crystalline, it means that the matrix material typically forms crystals from a melt of matrix material.

Preferred materials for use as the carrier include erythritol, mannitol, xylitol, sorbitol, glucose, sucrose, polyethylene glycols, polyvinylpyrrolidone, polyvinylalcohol, crospovidone, polvinylpyrrolidone-polyvinylacetate copolymers, hydroxypropylcellulose, hydroxypropylmethylcellulose, chitosan, polyacrylates and polymethacrylates. More preferably the carrier material includes erythritol, mannitol, xylitol, sorbitol, glucose, sucrose, polyethylene glycols. Even more preferably, it is selected from erythritol and/or mannitol. Most preferably the carrier is erythritol.

The most preferred materials have the technical common feature that they are hydrophilic, non-polymeric, that they melt at below a temperature of 190°C and that, upon solidification, they crystallize rapidly. In this context "rapidly" means that the ratio of the melting temperature of the crystalline matrix material to the glass transition temperature of the corresponding alcohol of the crystalline matrix material is greater than 1.6. That is, these materials have a significantly higher propensity to form crystals than to form amorphous masses. This is contrary to the nature of many known sugar alcohols, the latter thus being unsuitable for use in the present invention.

As stated above, most preferably, the carrier material is erythritol. Erythritol is most preferred since it is a low molecular weight food grade sugar alcohol that is a stable crystalline material at room temperature and melts at a temperature of 121°C. Its viscosity, as measured by rotational viscometry, is only 24 mPa.s at 130°C, which reduces the energy input required during processing compared to more viscous materials and lowers the associated risk of overheating the sensitive active ingredient. Erythritol also has a tendency to crystallize rapidly despite modest amounts of the active ingredient or other adjuncts; it has good solvency properties (especially for compound I), and has thermal and chemical stability, that is particularly important when it is to be used with strong acids or bases.

The delivery system is preferably crystalline. In the context of the present invention, "crystalline" means that, relative to the total weight of the carrier material, 75% or more, more preferably 80% or more, most preferably 90% or more of the matrix or carrier material is in crystalline form. This has the advantage that it is less hygroscopic than, for instance, amorphous delivery systems.

By "in crystalline form" is meant that the matrix comprises crystals that exhibits long-range order in three dimensions and/or that the matrix comprises meso-crystals, as described in the publication (12) Cölfen, H.; Antonietti, M. Angew. Chem., Int. Ed. 2005, 44, 5576, i.e. a superstructure of crystalline nanoparticles with external crystal faces on the scale of some hundred nanometers to micrometers. Crystallinity and meso-crystallinity can be measured using known techniques in the art such as powder x-ray diffraction (PXRD) crystallography, scanning electron microscopy, solid state NMR or differential scanning calorimetry (DSC).

The delivery system is preferably spray-chilled or melt-cooled. Spray chilling is particularly advantageous since it provides discrete particles that have a reduced tendency to form voids and shell-like structures, such as may occur during conventional spray drying processes. This provides denser particles than those typically formed by spray drying and creates a tendency for particles to sink in an aqueous environment, such as a beverage, rather than form a raft or layer on the surface. The tendency to sink also enhances dissolution rate due to enhanced wetting.

The freely-settled bulk density of the product comprising the particles of the invention is preferably from 0.7g cm⁻³ to 1.35g cm⁻³.

The particle density, i.e. the density of the individual particles, is preferably from 1g cm⁻³ to 1.45g cm⁻³.

The high density provides the advantage noted above, i.e. when the delivery system is introduced into an aqueous liquid such as a beverage, the formation of powder rafts or layers on the surface of a liquid becomes less likely by allowing gravity to pull the particles below the fluid surface thereby enhancing wetting.

The delivery system comprises a poorly water soluble solid active ingredient having the structure: 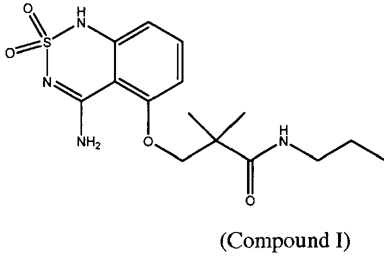 or salts thereof
For the purposes of the present invention, the active ingredient having the structure of compound I is also referred to as "formula I".

Compound I and its method of manufacture are described in publication WO-A2-2010/014666 (Senomyx, Inc) from page 29 line 25 to pages 48 line 27.

The active ingredient is preferably present in an amount of from about 1 % to about 50% by weight, based on the total weight of the delivery system.

The active ingredient is solid at room temperature. The delivery system provides significantly improved dissolution kinetics of the active ingredient. For this reason, liquid active ingredients are not relevant to and are outside the scope of the present invention.

The active ingredient may be encapsulated with one or more additional ingredients. For the sake of example, the following non-exhaustive categories of additional active ingredient are provided. Thus, for instance, the additional active ingredient may be a flavoring, perfuming or nutraceutical ingredient or composition.

The phrase "flavor or fragrance compound or composition" as used herein defines a variety of flavor and fragrance materials of both natural and synthetic origin. They include single compounds and mixtures. Natural extracts can also be encapsulated in the extrudate; these include e.g. citrus extracts, such as lemon, orange, lime, grapefruit or mandarin oils, or essential oils of spices, amongst other.

The phrase flavor includes not only flavors that impart or modify the smell of foods but include taste imparting or modifying ingredients. The latter do not necessarily have a taste or smell themselves but are capable of modifying the taste that other ingredients provides, for instance, salt enhancing ingredients, sweetness enhancing ingredients, umami enhancing ingredients, bitterness blocking ingredients and so on.

Further specific examples of such flavor and perfume components may be found in the current literature, e.g. in Perfume and Flavor Chemicals, 1969, by S. Arctander, Montclair N.J. (USA) ; Fenaroli's Handbook of Flavor Ingredients, CRC Press or Synthetic Food Adjuncts by M.B. Jacobs, van Nostrand Co., Inc.. They are well-known to the person skilled in the art of perfuming, flavoring and/or aromatizing consumer products, i.e. of imparting an odour or taste to a consumer product.

The delivery system may comprise further optional components. For instance, a carbohydrate, in addition to the carbohydrate that are present as the crystalline matrix material may be present to aid processing. Examples of suitable carbohydrates include monosaccharides, oligosaccharides, polysaccharides or any modified form thereof. If the delivery system is crystalline, it is important that the carbohydrate is not present at a level that would adversely affect the crystalline structure of the delivery system. Thus, in the matrix, any such carbohydrate is present at a level of 5% by weight or less based on the total weight of the matrix.

The delivery system according to the invention preferably comprises a surfactant. The surfactant helps, for instance, to prevent or reduce agglomeration of the particles of the active ingredient, thereby ensuring a better distribution of the particles throughout the delivery system matrix. Examples of suitable surfactants include lecithin, modified lecithins such as lyso-phospholipids, DATEM, mono- and diglycerides of fatty acids, sucrose esters of fatty acids, citric acid esters of fatty acids, and other suitable emulsifiers as cited in reference texts such as Food Emulsifiers And Their Applications, 1997, edited by G.L. Hasenhuettl and R.W. Hartel.

Water may be present at very low levels in the matrix. For instance, 10% or less by weight based on the total weight of the matrix, more preferably 7% or less, even more preferably 5% or less, most preferably 2% or less, e.g. 1% or less by weight of water may be present. Such a small amount of water may beneficially lower the melting point of the matrix thereby reducing the temperature to which the active ingredient is subjected. Furthermore, since there is little or no need to remove water from the mixture in preparing the solid dispersion, there is a minimal risk of "puffing" due to the evaporation of water. This is a known problem with spray-drying where the water, as it evaporates, can create voids in the particle structure. Thus, solid dispersions according to the invention typically have a higher density than corresponding spray-dried particles and so provide for a more compact storage and transportation of the finished product, as well as an enhanced dissolution rate due to the prevention of raft formation in low mixing conditions. By "low mixing conditions", it is meant mixing conditions, which are gentle enough so that particles on the surface stay on the surface rather than being dragged down into the fluid, as would occur under shearing, especially high-shear conditions.

Adjuvants such as food grade colorants can also be present so as to provide colored delivery systems.

If desired, an anticaking agent can be present in the delivery system.

The delivery system may further comprise a pH modifying material, such as an acid or a base.

The delivery system may be further encapsulated to provide additional benefits. For instance, a barrier material may be coated onto the delivery system, in order to serve as a moisture barrier or an enteric coating. Examples of suitable barrier materials include modified celluloses such as ethyl cellulose, waxes, fats, zein, shellac and the like.

The delivery system according to the present invention comprises particles. The particles preferably comprise individual crystals or a plurality of crystals. For instance, the particles of the delivery system may comprise a lattice of crystals joined together. Preferably the average particle size, based on the mean diameter, of the delivery system is from 5 to 1000 microns. The particles are preferably of substantially uniform granulometry.

If the process of the invention is spray-chilling, it comprises the following distinct steps:

### (i) Forming a melt of a crystalline carrier material

This forms a liquid continuous phase which is essential so that the active ingredient can be emulsified, dispersed or preferably dissolved within it.

It is highly desirable that the melting point of the continuous phase is less than 130°C since this helps to prevent significant degradation of heat labile active ingredients.

### (ii) Incorporating the solid active ingredient into the melt

This step can be performed by any standard process and the skilled person will readily appreciate suitable methods by which this can be accomplished.

### (iii) Forming a single-phase solution of the active ingredient with the carrier

Preferably, a single-phase solution is formed of the active ingredient with the carrier due to the dissolution of the active in the carrier. In this case, gentle mixing is advantageous to ensure a homogeneous composition. Alternatively, if the active is immiscible with the carrier, an emulsion, dispersion or suspension is formed under conditions in which the product is homogenized. In this case, homogenization is highly advantageous since it reduces the risk of phase separation which, upon solidification, would cause the active ingredient not to be included within the matrix structure of the carrier material. This can be performed using mixing devices known in the art for forming emulsions. Non-limiting examples include a high shear rotor stator mixer, high pressure homogenizer, static mixer, membrane emulsifier, or colloid mill.

Optionally and advantageously, the melt mixture is supercooled. In other words, it is preferably cooled below the melting point of the matrix material but remains in the form of a melt. This reduces the amount of heat energy that needs to be removed in the subsequent step and also reduces the exposure of the potentially labile active component to undesirable thermal conditions.

If an emulsion is formed from the melt, it is preferred that the phase volume of the oil is less than 50%, more preferably less than 40% so as to maintain the emulsion with the oil in the dispersed phase of the emulsion.

The melt-mixture comprises a low amount of water, enabling the formation of the spray-chilled solid without requiring a large amount of water to be driven off. Thus the melt-mixture comprises 10% or less, more preferably 7% or less, even more preferably 5% or less, most preferably 2% or less, e.g. 1% or less by weight of water by weight based on the total weight of the melt-mixture.

### (iv) Forming discrete particles of the melt-mixture

In the context of the present invention, "discrete particles" means particles, droplets or fibres.

The particles are preferably formed by a process that is suitable for low viscosity melts. For instance, the particles may be formed by techniques such as ultrasonic atomization, centrifugal wheel atomization, prilling (break-up of a jet or dripping).

Cutting or chopping is not suitable in the present context since this typically requires high viscosity melts in order to be effective.

The step of forming the particles from the melt is performed either above the melt temperature of the matrix or, more preferably, on the supercooled matrix.

Any suitable commercially available apparatus known to the skilled person can be used in this step.

### (v) Cooling the discrete particles

Cooling of the melt particles formed in the previous step is required to induce crystallisation.

The cooling step is performed rapidly in order to ensure that the active ingredient remains included, to a significant extent, in the developing crystals. For instance, it is desirable that the cooling step comprises heat removal at a rate of greater than about 600kJ.kg⁻¹.min⁻¹.

This is advantageous in that it allows the domain size of the active ingredient to be reduced, so improving the dissolution kinetics thereof.

To achieve the rapid cooling required according to the present invention, suitable processes include, but are not limited to spray congealing, spray chilling, or melt atomization. Such processes are sometimes referred to generically as prilling. The cooling step can be performed by quenching with a cooling medium, such as a cooling gas or liquid, Inert gases and liquids such as limonene, liquid nitrogen, cooling media air, nitrogen and carbon dioxide are all suitable for this purpose.

Suitable apparatus and processes include cooling of the particles in a cooling tower, fluidized bed or cooled belt or directly in an immiscible fluid.

Where the crystalline carrier is xylitol, sorbitol, sucrose, glucose or mixtures thereof, step (iv) can be omitted and the mixture prepared in step (iii) is simply cooled according to step (v) above and then an additional step in which the solid is ground to the desired particle size.

In the process according to the present invention, the incorporation of the solid active ingredient, the formation of the discrete particles, and the solidification processes, preferably crystallization processes, are achieved in distinct phases or steps of the process. This is in contrast to traditional co-crystallization processes for forming delivery systems, which involves volatilization of water at the same time as oil incorporation. Such differences provide the process of the present invention with a more precise control of the nature of the delivery system and reduce the risk of creating channels in the matrix structure, preferably crystalline matrix structure, that are a known factor contributing to a porous network that eventually can reduce the barrier protection afforded to the active ingredient.

In the process according to the present invention, there is little or no reduction in moisture content during any of the steps. This allows for a more effective inclusion and entrapment of the active and thereby allows improved protection against oxidation.

The absence of a drying step results in simpler processing and faster crystallization giving smaller active ingredient domain size and, in use, faster dissolution.

The delivery system can be used to enhance a variety of products. For instance, it can be used in edible compositions such as foodstuffs, pharmaceutical compositions, nutraceutical compositions, oral care compositions, such as chewing-gum or toothpaste, as well as home-care and body-care compositions.

More preferably, the delivery system is part of a food or beverage food where rapid dissolution of sucrose occurs prior to consumption. For instance, non-limiting examples include dry beverages, intermediate moisture content foods, cereals, and cereal bars.

If a flavor oil is present in addition to the solid active ingredient, it can be advantageously used to impart or modify the organoleptic properties of a great variety of edible products, i.e. foods, beverages, pharmaceuticals and the like. In a general manner, such as flavor oil enhances the typical organoleptic effect of the corresponding unencapsulated active ingredient.

The total amount of delivery system in such consumer products can vary across a wide range of values, which are dependent on the nature of the consumer product and that of the particular delivery system of the invention used.

Typical amounts, to be taken strictly by way of example, are in a range of from 0.0005% to 5%, more preferably 0.0005% to 1% by weight, based on the weight of a flavoring composition or finished consumer product into which they are included.

### Examples

The invention will now be described in further detail by way of the following examples.

### Example 1

### Preparation of a Delivery System of the Invention

A dry mixture of 4.0g compound 1 (prepared according the method given in WO-A2-2010/014666, page 30 scheme 1 and purified according to example 4, page 48), 0.4g powdered sodium hydroxide, and 35.6g erythritol were combined in a glass beaker. The powders were mixed by stirring with a spatula. The beaker was placed into a heating block that was tempered to 200°C. This yielded a solution that, to the naked eye, appeared to be a single phase. The solution was poured into a stainless steel vessel that was tempered to 160°C. The vessel was pressurized with nitrogen (40 p.s.i., 275.8 K.Pa) and the solution was pushed through a full-cone single-fluid spray nozzle (McMaster-Carr part 32885K811). The spray broke up into fine melt droplets which were collected in a bath of limonene chilled to 0°C, wherein the droplets quickly solidified. The limonene was decanted and the settled powder was allowed to dry on a paper towel. After 5 hours the limonene had evaporated and the material was found to be a free flowing powder.

### Example 2

### Dissolution kinetics

The dissolution kinetics of the powder prepared in example 1 was compared to that of Compound 1 alone. Evaluation was performed under standard conditions using a Distek 2100B USP 2 dissolution system and a model beverage base.
The model beverage was prepared by stirring together 35g sucrose, 1.5g citric acid and 965.3g deionised water until the sucrose was fully dissolved.
Comparative sample 1 was prepared by adding 20 mg of Compound 1 (unencapsulated) to 1 litre of the beverage base to provide 20 ppm of compound 1.
Sample 2 was prepared by adding 200 mg of the powder prepared in example 1 to 1 litre of the beverage to provide, once dissolved, a solution containing 20 ppm of compound 1. The samples were each stirred at 200 rpm and the concentration of compound 1 in solution was monitored as a function of time using a UV/VIS spectrometer probe (measuring absorbance at 324 nm). The results are given in the following table (where the values represent the amount (ppm) of Compound 1 in solution:

**Table 1 : Concentration in Solution**

| Time (seconds) | Sample 1 | Sample 2 |
|---|---|---|
| 0 | 0 | 0 |
| 10 | 0.1 | 18.5 |
| 30 | 0.2 | 19.4 |
| 60 | 0.3 | 19.6 |
| 300 | 0.6 | 20.2 |
| 600 | 1.4 | 20.1 |
| 3600 | 10.2 | 20.2 |

The results demonstrate that the rate of dissolution of compound 1 in the delivery system according to the invention is much greater than the rate of dissolution of Compound 1 by itself.

In particular, the time at which 50% dissolution of Compound 1 was achieved was less than 10 seconds for the sample according to the invention and approximately 3600 seconds for the comparative sample.

## Claims

1. A delivery system in the form of a solid dispersion comprising
(i) a carrier material consisting essentially of crystalline matrix material, and
(ii) a solid active ingredient having the structure: 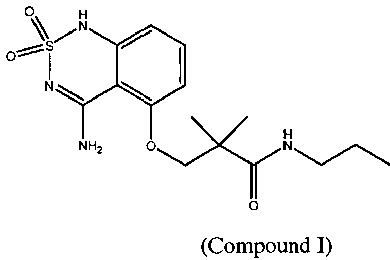 or salts thereof
wherein the solid active ingredient (ii) is dispersed throughout a matrix of the carrier material (i).

2. The delivery system according to claim 1 wherein the crystalline matrix material is selected from the group consisting erythritol, mannitol, xylitol, sorbitol, glucose, sucrose, polyethylene glycols, polyvinylpyrrolidone, polyvinylalcohol, crospovidone, polvinylpyrrolidone-polyvinylacetate copolymers, hydroxypropylcellulose, hydroxypropylmethylcellulose, chitosan, polyacrylates and polymethacrylates.

3. The delivery system according to claim 1 wherein the crystalline matrix material is selected from the group consisting of erythritol, mannitol, xylitol, sorbitol, glucose, sucrose, polyethylene glycols.

4. The delivery system according to claim 1 wherein the crystalline matrix material is selected from the group consisting of erythritol and/or mannitol.

5. The delivery system according to claim 1 wherein the crystalline matrix material is erythritol.

6. The delivery system according to claim 1, wherein the particles have an average means diameter of 5 to 1000 microns.

7. The delivery system according to claim 1 having a freely settled density of 0.7g cm⁻³ to 1.35g cm⁻³.

8. The delivery system according to claim 1 comprising a pH modifying material.

9. A process for preparing a delivery system comprising the steps of:
(i) forming a melt of a carrier material consisting essentially of a crystalline matrix material,
(ii) incorporating a solid active ingredient having the structure according to compound I into the melt,
(iii) forming a melt-mixture comprising an emulsion, dispersion, solution or suspension of the active ingredient in the melt,
(iv) forming discrete particles of the melt mixture,
(v) cooling the discrete particles,
(vi) optionally grinding the discrete particles
so as to form a solid dispersion of the active ingredient in a matrix of the delivery system.

10. A process according to claim 9 wherein the cooling step comprises heat removal at a rate of greater than about 600kJ.kg⁻¹.min⁻¹.

11. A process according to claim 9 wherein the particulate delivery system is further encapsulated.

## Patentansprüche

1. Freisetzungssystem in der Form einer festen Dispersion, umfassend
(i) ein Trägermaterial, bestehend im Wesentlichen aus kristallinem Matrixmaterial, und
(ii) einen festen Wirkstoff mit der Struktur: 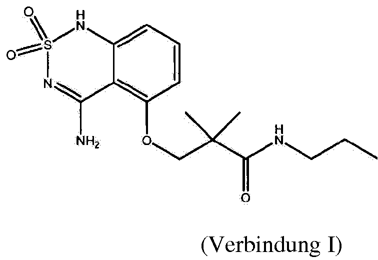 oder Salze davon,
wobei der feste Wirkstoff (ii) überall in einer Matrix des Trägermaterials (i) dispergiert ist.

2. Freisetzungssystem gemäß Anspruch 1, wobei das kristalline Matrixmaterial aus der Gruppe, bestehend aus Erythrit, Mannit, Xylit, Sorbit, Glucose, Sucrose, Polyethylenglycolen, Polyvinylpyrrolidon, Polyvinylalkohol, Crospovidon, Polvinylpyrrolidon-Polyvinylacetat-Copolymeren, Hydroxypropylcellulose, Hydroxypropylmethylcellulose, Chitosan, Polyacrylaten und Polymethacrylaten, ausgewählt ist.

3. Freisetzungssystem gemäß Anspruch 1, wobei das kristalline Matrixmaterial aus der Gruppe, bestehend aus Erythrit, Mannit, Xylit, Sorbit, Glucose, Sucrose, Polyethylenglycolen, ausgewählt ist.

4. Freisetzungssystem gemäß Anspruch 1, wobei das kristalline Matrixmaterial aus der Gruppe, bestehend aus Erythrit und/oder Mannit, ausgewählt ist.

5. Freisetzungssystem gemäß Anspruch 1, wobei das kristalline Matrixmaterial Erythrit ist.

6. Freisetzungssystem gemäß Anspruch 1, wobei die Teilchen einen durchschnittlichen mittleren Durchmesser von 5 bis 1000 Mikron haben.

7. Freisetzungssystem gemäß Anspruch 1 mit einer frei abgesetzten Dichte von 0,7 g cm⁻³ bis 1,35 g cm⁻³.

8. Freisetzungssystem gemäß Anspruch 1, umfassend ein pH modifizierendes Material.

9. Verfahren zum Herstellen eines Freisetzungssystems, umfassend die Schritte:
(i) Erzeugen einer Schmelze eines Trägermaterials, bestehend im Wesentlichen aus einem kristallinen Matrixmaterial,
(ii) Einbringen eines festen Wirkstoffs mit der Struktur entsprechend Verbindung I in die Schmelze,
(iii) Erzeugen eines Schmelzgemisches, umfassend eine Emulsion, Dispersion, Lösung oder Suspension des Wirkstoffs in der Schmelze,
(iv) Erzeugen diskreter Teilchen des Schmelzgemischs,
(v) Abkühlen der diskreten Teilchen,
(vi) wahlweise Zermahlen der diskreten Teilchen,
um eine feste Dispersion des Wirkstoffs in einer Matrix des Freisetzungssystems zu erzeugen.

10. Verfahren gemäß Anspruch 9, wobei der Abkühlungsschritt eine Wärmeableitung mit einer Geschwindigkeit von mehr als etwa 600 kJ.kg⁻¹.min⁻¹ umfasst.

11. Verfahren gemäß Anspruch 9, wobei das teilchenförmige Freisetzungssystem überdies eingekapselt ist.

## Revendications

1. Système de relargage sous forme de dispersion solide comprenant
(i) une matière véhicule constituée essentiellement d'une matière matrice cristalline, et
(ii) un ingrédient actif solide ayant la structure: 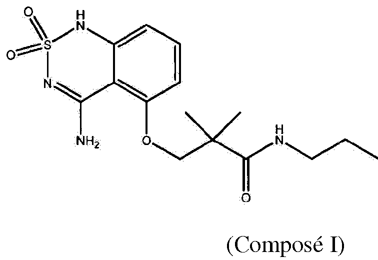 ou les sels de celui-ci
dans lequel l'ingrédient actif solide (ii) est dispersé dans toute une matrice de la matière véhicule (i).

2. Système de relargage selon la revendication 1 dans lequel la matière matrice cristalline est sélectionnée dans le groupe constitué par l'érythritol, le mannitol, le xylitol, le sorbitol, le glucose, le saccharose, les polyéthylèneglycols, la polyvinylpyrrolidone, l'alcool polyinylique, la crospovidone, les copolymères polyvinylpyrrolidone-polyacétate de vinyle, l'hydroxypropylcellulose, l'hydroxypropylméthylcellulose, le chitosane, les polyacrylates et les polyméthacrylates.

3. Système de relargage selon la revendication 1 dans lequel la matière matrice cristalline est sélectionnée dans le groupe constitué par l'érythritol, le mannitol, le xylitol, le sorbitol, le glucose, le saccharose, les polyéthylèneglycols.

4. Système de relargage selon la revendication 1 dans lequel la matière matrice cristalline est sélectionnée dans le groupe constitué par l'érythritol et/ou le mannitol.

5. Système de relargage selon la revendication 1 dans lequel la matière matrice cristalline est l'érythritol.

6. Système de relargage selon la revendication 1, dans lequel les particules ont un diamètre moyen de 5 à 1000 micromètres.

7. Système de relargage selon la revendication 1 ayant une masse volumique, en sédimentation libre, de 0,7 g.cm⁻³ à 1,35 g.cm⁻³.

8. Système de relargage selon la revendication 1 comprenant une matière modifiant le pH.

9. Procédé de préparation d'un système de relargage comprenant les étapes de :
(i) formation d'une masse fondue d'une matière véhicule constituée essentiellement d'une matière matrice cristalline,
(ii) incorporation d'un ingrédient actif solide ayant la structure selon le composé 1 dans la masse fondue,
(iii) formation d'un mélange fondu comprenant une émulsion, dispersion, solution ou suspension de l'ingrédient actif dans la masse fondue,
(iv) formation de particules discrètes du mélange fondu,
(v) refroidissement des particules discrètes,
(vi) éventuellement, broyage des particules discrètes
de façon à former une dispersion solide de l'ingrédient actif dans une matrice du système de relargage.

10. Procédé selon la revendication 9 dans lequel l'étape de refroidissement comprend une évacuation de chaleur à une vitesse supérieure à environ 600 kJ.kg⁻¹.min⁻¹.

11. Procédé selon la revendication 9 dans lequel le système de relargage particulaire est en outre encapsulé.
